# EUROPÄISCHE PATENTSCHRIFT

(11) **EP 1 557 573 B1**
(45) Veröffentlichungstag und Bekanntmachung des Hinweises auf die Patenterteilung: **04.10.2006**
(21) Anmeldenummer: 04290183.5
(22) Anmeldetag: 23.01.2004
(51) Int. Cl.: F16B 5/02, F16B 7/04, F16B 5/06

(54) **Vorrichtung zur Fixierung zweier Bauteile in einem bestimmten Abstand voneinander**
Device for spaced apart fasteneing of two parts
Dispositif pour fixer deux éléments espacées

(43) Veröffentlichungstag der Anmeldung: 27.07.2005
(73) Patentinhaber: Lisi Automotive Rapid, 95650 Puiseux Pontoise (FR)
(72) Erfinder: Endres, Markus, 69214 Eppelheim (DE)
(74) Vertreter: Berger, Helmut

(56) Entgegenhaltungen:
- GB-A- 696 909
- GB-A- 974 115
- GB-A- 1 229 668
- US-A- 5 127 762

## Beschreibung

Die vorliegende Erfindung betrifft eine Vorrichtung zur Fixierung zweier Bauteile in einem bestimmten Abstand voneinander, wie z.B. ein Scheinwerfergehäuse oder eine Armaturentafel an einem Blech oder einer Karrosserie.

Die bisher zu diesem Zweck verwendeten Vorrichtungen sind nicht zufriedenstellend, da sie kompliziert und nur mit Schwierigkeiten anbringbar sind.

Der Erfindung liegt die Aufgabe zugrunde, eine Vorrichtung zu schaffen, die die vorgenannten Mängel nicht besitzt.

Die erfindungsgemäße Aufgabe wird dadurch gelöst, daß die Vorrichtung eine zylindrische Aussenhülse, die in eine zylindrische Durchführung eines der zwei Bauteile axial einschiebbar und an dem anderen Bauteil festlegbar ist, und eine axial in die Aussenhülse einführbare Innenhülse besitzt, und daß die Aussenhülse Mittel aufweist, die bei dem Einführen der Innenhülse im wesentlichen radial nach aussen bewegbar und an die Innenwand der Durchführung des auf die Aussenhülse aufgesetzten Bauteils an drückbar sind.

Die Erfindung wird im folgenden unter Bezugnahme auf die beigefügten Abbildungen näher erklärt.
Die Figur 1 veranschaulicht in einer Seitenansicht die Fixierung zweier Bauteile zueinander, mit Hilfe der erfindungsgemäßen Vorrichtung ;
Die Figur 2 ist eine perspektivische Ansicht der Innenhülse der erfindungsgemäßen Fixierungsvorrichtung ;
Die Figur 3 ist eine Draufsicht auf die Innenhülse der Figur 2 in Richtung des Pfeils III ;
Die Figur 4 ist eine Seitenansicht der Innenhülse der Figur 2 ;
Die Figur 5 ist eine perspektivische Darstellung der Aussenhülse der erfindungsgemäßen Fixierungsvorrichtung ;
Die Figur 6 ist eine Draufsicht auf die Aussenhülse gemäß der Figur 5 in Richtung des Pfeils VI ;
Die Figur 7 ist eine Seitenansicht der Aussenhülse der Figur 5 in Richtung des Pfeils VII, und
Die Figur 8 ist eine Seitenansicht der Aussenhülse im wesentlichen senkrecht zur Figur 7.

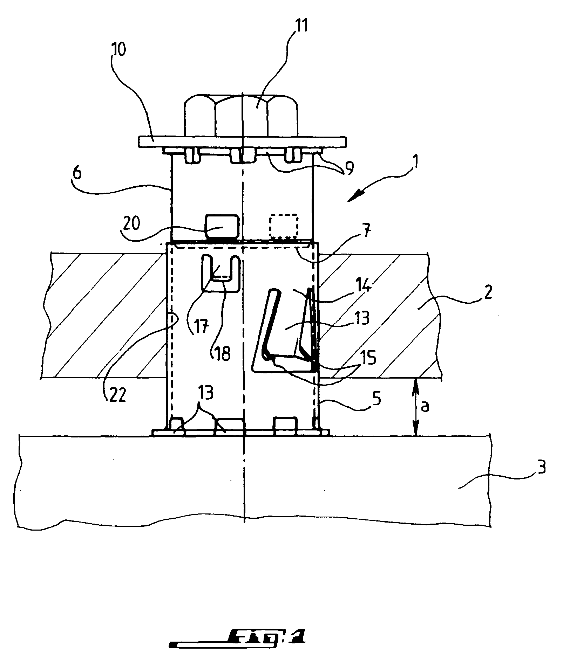

Die Figur 1 zeigt die mit 1 bezeichnete erfindungsgemäße Vorrichtung während der Fixierung eines Bauteils 2 an einem Bauteil 3. Die erfindungsgemäße Vorrichtung 1 besitzt eine im wesentlichen zylindrische Aussenhülse 5, die sich mit einer Stirnfläche an dem Bauteil 3 abstützt, und eine ebenfalls im wesentlichen zylindrischen Innenhülse 6, die in die Aussenhülse 5 axial durch die andere Stirnseite hindurch einschiebbar ist. Die Figur 1 zeigt die Innenhülse in ihrer Stellung zum Beginn des Einschiebens in die Aussenhülse 5. Das dem inneren in die Aussenhülse einführbaren Ende 7 gegenüberliegende äussere Ende 8 weist radial rechtwinklig nach aussen abgebogene Fußlappen 9 auf. Der durch diese Lappen gebildete Aussenflansch des freien Endes der Innenhülse 6 dient zur Auflage einer Unterlegscheibe 10, auf deren Aussenfläche sich der Kopf 11 einer Schraube abstützt, die die Innenhülse axial durchdringend in das Bauteil 3 einschraubbar ist. Die Schraube bewirkt infolgedessen ein Einschiebe der Innenhülse 6 in die Aussenhülse 5. Letztere besitzt an ihrem dem Bauteil 3 zugewandten Ende ebenfalls radial senkrecht abstehende, einen Flansch bildende Lappen 13, mit denen sich die Aussenhülse 5 auf dem Bauteil 3 abstützt.

Wie die Figuren 5 bis 8 zeigen, besitzt die Aussenhülse zwei im wesentlichen diametral einander gegenüberliegende radial nach aussen bewegbare Zungen 13, die an einem Ende an der Wand der Hülse schwenkbar befestigt sind und an ihren anderen, freien Ende nach aussen abstehende Krallen 15 besitzt. Die Zungen 13 sind aus der Wand der Hülse so ausgeschnitten, daß sie sich im wesentlichen in axialer Richtung erstrecken und nur noch an ihrem dem oberen Ende der Hülse zugewandten Bereich mit dem Hülsenmaterial verbunden sind, sodaß dort eine im wesentlichen parallele zur Stirnfläche sich verlaufende Schwenklinie 14 gebildet wird, die es den Zungen erlaubt, sich mit ihrem freien Ende von innen nach aussen bezogen auf die Hülse, also radial zu bewegen. Wie die Figuren zeigen, sind die Zungen 13 an ihrem freien Ende breiter als am anderen Ende.

Die Aussenhülse 5 besitzt ferner mehrere, im dargestellten Beispiel 3 Abkantungen 17, die im gleichen Winkelabstand zueinander in der Nähe des freien Endes der Hülse ausgebildet sind, d.h. dem Ende, in das die Innenhülse 6 einführbar ist. Jede Abkantung 17 wird durch einen aus der Wand der Hülse ausgeschnittene Zunge 18 gebildet, die sich im wesentlichen parallel zur Achse der Hülse zu deren Abstützende hin erstreckt. Der obere Bereich, mit dem die Zunge 18 mit der Hülsenwand verbunden bleibt, bildet eine sich parallel zur oberen Stirnfläche der Hülse erstreckende Schwenklinie. Die Zungen 18 sind schräg nach innen gerichtet.

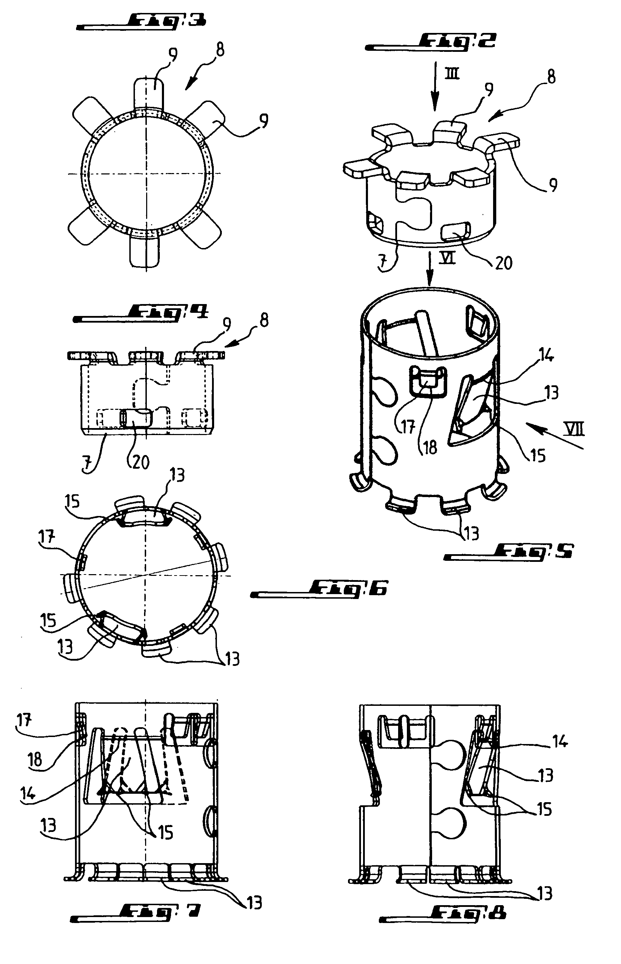

Die Figuren 2 bis 4 zeigen, daß die Innenhülse 6 in der Nähe ihres unteren Endes, mit dem sie in Aussenhülse eingeführt wird, drei Fenster 20 besitzt, die so angeordnet sind, daß die Zungen 18 in die Fenster eingreifen können und somit eine Vormontage der Innenhülse an der Aussenhülse bewirken.

Unter Bezugnahme auf die Figur 1 wird im folgenden beschrieben, wie mit der erfindungsgemäßen Vorrichtung ein Bauteil 2 in einem bestimmten Abstand vom Bauteil 3 fixiert wird.

Die Aussenhülse 5 wird in einem ersten Schritt in die Durchführung 22 im Bauteil 2 geschoben. Danach wird die Innenhülse 6 bis zur Vormontageposition, in der die Vormontagezungen 18 in die Fenster 20 eingreifen, eingeführt. Damit ist die Innenhülse 6 verliersicher an der Aussenhülse 5 angebracht. Das Bauteil 2 wird in dem gewünschten Abstand a zum Bauteil 3 angeordnet. Die Hülsen 5 und 6 werden durch die Schraube 11, deren inneres Ende bereits in das dazu vorgesehene Bohrloch im Bauteil 3 eingreift, gehalten. Die Blockierung des Bauteils 2 auf der Aussenhülse 5 wird durch Einschrauben der Schraube 11 erreicht, die dabei die Innenhülse 6 axial in die Aussenhülse 5 drückt, was zur Folge hat, daß die Zungen 13 durch die Innenhülse 6 radial nach aussen bewegt und die Haltekrallen 15 in die Wand der Durchführung 22 des Bauteils 2 gedrückt werden. Letzteres ist somit im definierten Abstand a vom Bauteil 3 verankert.

Die erfindungsgemäße Fixierungsvorrichtung kann verändert werden, ohne den Rahmen der Erfindung zu verlassen. So kann zum Beispiel die Vorrichtung auch ohne Vormontagemittel hergestellt werden, d.h. ohne die Vormontagezungen 13 und ohne die Fenster 20.

## Patentansprüche

1. Vorrichtung zur Fixierung zweier Bauteile in einem bestimmten Abstand voneinander, wie z.B. ein Scheinwerfergehäuse oder eine Armaturentafel an einem Blech oder einer Karrosserie, **dadurch gekennzeichnet, daß** sie eine zylindrische Aussenhülse (5), die in eine zylindrische Durchführung (22) eines (2) der zwei Bauteile (2, 3) axial einschiebbar und an dem anderen Bauteil (3) festlegbar ist, und ein axial in die Aussenhülse (5) einführbar Innenhülse (6) besitzt, und daß die Aussenhülse (5) Mittel (13) aufweist, die bei dem Einführen der Innenhülse (6) im wesentlichen radial nach aussen bewegbar und an die Innenwand der Durchführung (22) des auf die Aussenhülse (5) aufgesetzten Bauteils (2) andrückbar sind.

2. Vorrichtung nach Anspruch 1, **dadurch gekennzeichnet, daß** die radial nach aussen bewegbaren Mittel der Aussenhülse von aus der Hülsenwand ausgeschnittenen Zungen (13) gebildet werden, die radial durch die Innenhülse (6) nach aussen schwenkbar sind und mit ihrem freien Ende an die Innenwand der Durchführung (22) andrückbar sind.

3. Vorrichtung nach Anspruch 2, **dadurch gekennzeichnet, daß** die Zungen (13) an ihren freien Enden nach aussen abstehende Krallen (15) besitzen.

4. Vorrichtung nach einem der Ansprüche 2 oder 3, **dadurch gekennzeichnet, daß** die Aussenhülse (5) an ihrem freien Ende eine Mehrzahl von zur Achse nach innen gerichtete aus der Hülsenwand ausgeschnittene Vormontagezungen (18) besitzt, die in entsprechende Fenster (20) beim Einschieben der Innenhülse (6) in die Aussenhülse (5) eingreifen, die am inneren, in die Aussenhülse einführbaren Ende (7) der Innenhülse vorgesehen sind.

5. Vorrichtung nach einem der Ansprüche 1 bis 4, **dadurch gekennzeichnet, daß** die Aussenhülse (5) an dem Ende, mit dem sie sich an dem Bauteil (3) abstützt, fußartige Lappen (13) zur Abstützung besitzt.

6. Vorrichtung nach einem der Ansprüche 1 bis 5, **dadurch gekennzeichnet, daß** sie eine Schraube besitzt, die die Innenhülse und die Aussenhülse axial durchdringend in ein Bohrloch im Bauteil (3) einschraubbar ist und beim Anziehen die Innenhülse in die Aussenhülse radial hineindrückt.

7. Vorrichtung nach einem der Ansprüche 1 bis 6, **dadurch gekennzeichnet, daß** das Bauteil (2), in dessen Durchführung (22) die Aussenhülse (5) einführbar ist, im vorbestimmten Abstand a vom anderen Bauteil (3) angebracht wird und dann das Bauteil (2) durch Einschieben der Innenhülse (6) in die Aussenhülse (6) in dieser Stellung fixierbar ist.

## Claims

1. Device for fixing two components at a particular distance from each other, such as, for example, a headlamp housing or an instrument panel on a metal sheet or a bodywork, **characterised in that** it has a cylindrical outer sleeve (5) which is axially insertable into a cylindrical passage (22) in one (2) of the two components (2, 3) and is fixable to the other component (3), and an inner sleeve (6) which is insertable axially into the outer sleeve (5), and that the outer sleeve (5) has means (13) which, on inserting the inner sleeve (6), are movable substantially radially outwardly and can be pressed against the inner wall of the passage (22) of the component (2) placed on the outer sleeve (5).

2. Device according to claim 1, **characterised in that** the radially outwardly movable means of the outer sleeve comprise tongues (13) cut out of the sleeve wall, said tongues being pivotable radially outwardly by the inner sleeve (6) and can be pressed with their free ends against the inner wall of the passage (22).

3. Device according to claim 2, **characterised in that** the tongues (13) have outwardly projecting claws (15) at their free ends.

4. Device according to one of the claims 2 or 3, **characterised in that** the outer sleeve (5) has, on its free end, a plurality of preassembly tongues (18) cut out of the sleeve wall and inwardly directed towards the axis, said tongues engaging in corresponding windows (20) on insertion of the inner sleeve (6) into the outer sleeve (5) and being provided on the inner end (7) of the inner sleeve which is insertable into the outer sleeve.

5. Device according to one of the claims 1 to 4, **characterised in that** the outer sleeve (5) has foot-like flaps (13) at one end for support, with which it supports itself against the component (3).

6. Device according to one of the claims 1 to 5, **characterised in that** it has a screw which can be screwed into a bore in the component (3) penetrating the inner sleeve and the outer sleeve axially and, on tightening, presses the inner sleeve radially into the outer sleeve.

7. Device according to one of the claims 1 to 6, **characterised in that** the component (2) into whose passage (22) the outer sleeve (5) can be introduced is mounted at a predetermined distance a from the other component (3) and then the component (2) can be fixed by inserting the inner sleeve (6) into the outer sleeve (5)¹
¹ Translator's note: There appears to be an error in the German original at this point. The reference number (6) has been used with a word with which the reference number (5) is otherwise associated. This has been amended accordingly in the translation. in this position.

## Revendications

1. Dispositif pour fixer deux composants à une distance définie l'un de l'autre, comme par exemple un boîtier de phare ou un tableau de bord sur une tôle ou une carrosserie, **caractérisé en ce qu'**il présente une douille extérieure (5) cylindrique, qui peut être introduite axialement dans un passage (22) cylindrique de l'un (2) des deux composants (2, 3) et peut être fixée sur l'autre composant (3), et une douille intérieure (6) pouvant être introduite axialement dans la douille extérieure (5), et **en ce que** la douille extérieure (5) présente des moyens (13) qui peuvent être déplacés sensiblement radialement vers l'extérieur lors de l'introduction de la douille intérieure (6) et peuvent être pressés sur la paroi interne du passage (22) du composant (2) posé sur la douille extérieure (5);

2. Dispositif selon la revendication 1, **caractérisé en ce que** les moyens, mobiles radialement vers l'extérieur, de la douille extérieure sont formés de lames (13) découpées dans la paroi de douille, lesquelles peuvent être basculées radialement à travers la douille intérieure (6) vers l'extérieur et être pressées avec leur extrémité libre sur la paroi intérieure du passage (22).

3. Dispositif selon la revendication 2, **caractérisé en ce que** les lames (13) présentent des griffes (15) débordant vers l'extérieur sur leurs extrémités libres.

4. Dispositif selon l'une quelconque des revendications 2 ou 3, **caractérisé en ce que** la douille extérieure (5) présente sur son extrémité libre une pluralité de lames de prémontage(18) dirigées vers l'extérieur et découpées dans la paroi de douille, lesquelles s'engagent dans des fenêtres (20) appropriées lors de l'insertion de la douille intérieure (6) dans la douille extérieure, lesquelles sont prévues sur l'extrémité (7) intérieure, pouvant être introduite dans la douille extérieure, de la douille intérieure.

5. Dispositif selon l'une que:conque des revendications 1 à 4, **caractérisé en ce que** la douille extérieure (5) présente pour l'appui des languettes (13) en forme de pied sur l'extrémité par laquelle elle s'appuie sur le composant (3).

6. Dispositif selon l'une quelconque des revendications 1 à 5, **caractérisé en ce qu'**il présente une vis qui peut être vissé dans un trou de perçage dans le composant (3) en pénétrant axialement la douille intérieure et la douille extérieure et enfonce radialement lors du serrage la douille intérieure dans la douille extérieure.

7. Dispositif selon l'une quelconque des revendications 1 à 6, **caractérisé en ce que** le composant (2), dans le passage (2) duquel la douille extérieure (5) peut être introduite, est placée à la distance prédéfinie a de l'autre composant et le composant (2) peut être fixé ensuite par l'insertion de la douille intérieure (6) dans la douille extérieure (6) dans cette position.
